# EUROPÄISCHE PATENTSCHRIFT

(11) **EP 2 140 404 B1**
(45) Veröffentlichungstag und Bekanntmachung des Hinweises auf die Patenterteilung: **30.11.2016**
(21) Anmeldenummer: 08714766.6
(22) Anmeldetag: 18.03.2008
(51) Int. Cl.: G06K 19/02

(54) **REINIGUNGSSTREIFEN FÜR GELD- UND KREDITKARTENAUTOMATEN**
CLEANING STRIPS FOR CASH AND CREDIT CARD MACHINES
BANDE NETTOYANTE POUR DISTRIBUTEURS DE BILLETS ET DISTRIBUTEURS À CARTES DE CRÉDIT

(30) Priorität: 02.04.2007 CH 523072007
(43) Veröffentlichungstag der Anmeldung: 06.01.2010
(73) Patentinhaber: ECS AG, 8832 Wollerau (CH)
(72) Erfinder: KABIS, Walter, CH-1213 Onex (CH); KRIENBÜHL-GISLER, Walter, CH-6314 Unterägeri (CH)
(74) Vertreter: Wiedmer, Edwin
(86) Internationale Anmeldenummer: PCT/CH2008/000116
(87) Internationale Veröffentlichungsnummer: WO 2008/119194

(56) Entgegenhaltungen:
- DE-U1-202005 016 573
- US-A1- 2005 266 211

## Beschreibung

### Technisches Gebiet

Die Erfindung betrifft einen Reinigungsstreifen oder -karte nach dem Oberbegriff des Anspruchs 1.

### Stand der Technik

Reinigungsstreifen oder -karten für Automatensysteme mit Kartenleser und Banknotenprüfer mit Durchzugsleser, mechanischem Steckleser oder Leser mit motorischem Einzug sind bekannt. Ein bekanntes Streifenmaterial besteht aus einem gegebenenfalls mit einem Reinigungsmittel getränkten Zellstoffvlies. Bekannt ist auch eine Reinigungskarte mit einer vollflächigen Flockbeschichtung sowie einer Flockbeschichtung in der Art eines Backsteinmauer-Musters.

Die US 2005/0266211 A1 offenbart eine Reinigungskarte aus einem Vliesstoff mit auf beiden Seiten der Karte aus der Kartenebene aufragenden, als Reinigungsflächen dienenden Erhebungen.

Aus der WO 2007/016512 A2 ist eine Reinigungskarte aus einem flexiblen Kunststoffmaterial, wie beispielsweise Polyethylen oder Polypropylen, bekannt. Auf beiden Seiten der Karte ragen bogenförmige Abschnitte als Reinigungsflächen aus der Kartenebene auf.
Ein Reinigungsstreifen der eingangs genannten Art ist aus der DE 20 2005 016 573 U1 bekannt.

Mit den bekannten Reinigungsstreifen und -karten lassen sich die Kartenleser und Banknotenprüfer von Geld- und Kreditkartenautomaten ohne Mehraufwand nicht immer befriedigend reinigen, so dass vermehrt mit Automatenausfällen zu rechnen ist.

### Darstellung der Erfindung

Der Erfindung liegt die Aufgabe zugrunde, einen Reinigungsstreifen oder eine Reinigungskarte der eingangs genannten Art mit verbesserter Reinigungswirkung zu schaffen. Zudem soll der Reinigungsstreifen oder die Reinigungskarte einfach und sicher handhabbar sein.

Zur erfindungsgemässen Lösung der Aufgabe führt ein Reinigungsstreifen oder eine Reinigungskarte mit den Merkmalen des Anspruchs 1.

Damit die zu reinigenden Geräte mit möglichst wenig Aufwand wirkungsvoll gereinigt werden können, sind die Querstreifen auf beiden Oberflächen bzw. auf der Vorder- und Rückseite des Streifens angeordnet.

Bevorzugt weisen die Querstreifen eine Breite von 5 bis 15 mm, vorzugsweise 8 bis 12 mm und einen gegenseitigen Abstand von 5 bis 20 mm, vorzugsweise 8 bis 18 mm, auf.

Bei dem erfindungsgemässen Reinigungsstreifens oder der Reinigungskarte liegen die auf der einen Seite des Streifens angeordneten Querstreifen zwischen den auf der anderen Seite des Streifens angeordneten Querstreifen.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: die Draufsicht auf die Vorderseite eines Reinigungsstreifens für Geldautomaten;
- Fig. 2: die Draufsicht auf die Rückseite des Reinigungsstreifens von Fig. 1;
- Fig. 3: den Längsschnitt durch den Reinigungsstreifen von Fig. 1 nach deren Linie I-I;
- Fig. 4: die Draufsicht auf die Vorderseite einer Reinigungskarte für Kreditkartenautomaten;
- Fig. 5: die Draufsicht auf die Rückseite der Reinigungskarte von Fig. 4;
- Fig. 6: den Längsschnitt durch die Reinigungskarte von Fig. 4 nach deren Linie II-II;
- Fig. 7: einen Längsschnitt durch einen Teil einer Reinigungskarte für Kreditkartenautomaten während eines Reinigungsvorgangs in vergrösserter Darstellung.

### Beschreibung von Ausführungsbeispielen

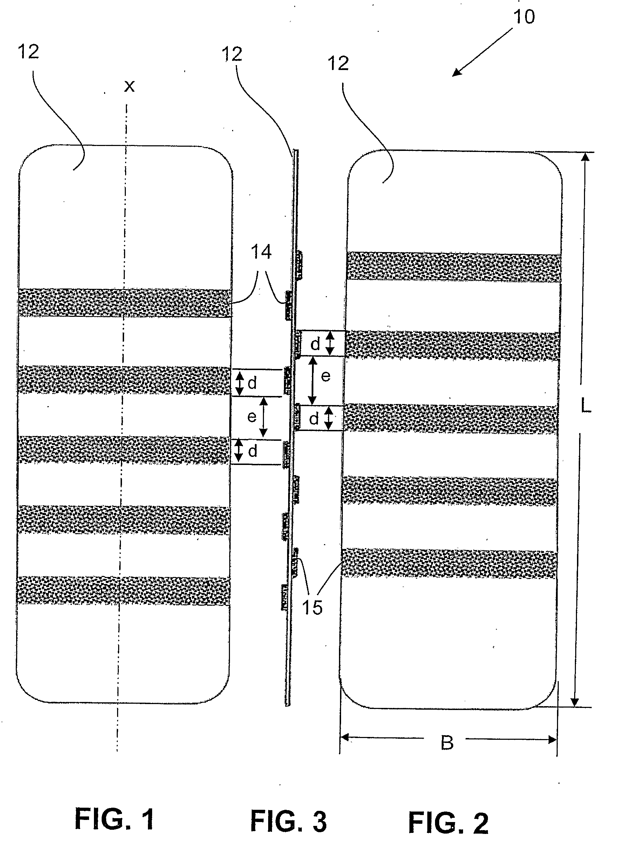

Ein in den Figuren 1 bis 3 dargestellter Reinigungsstreifen 10 für Geldautomaten weist beispielsweise eine Länge L von 185 mm und eine Breite B von 65 mm auf. Im gezeigten Beispiel entspricht die Längsrichtung des Reinigungsstreifens 10 der Einschubrichtung x des Banknotenprüfers eines Geldautomaten. Der Reinigungsstreifen 10 umfasst einen Streifen 12 aus einem flexiblen Trägermaterial aus z.B. Polyvinylchlorid (PVC). einer Dicke von 0.15 mm. Der Streifen 12 ist beidseitig mit Querstreifen 14, 15 aus einer Flockbeschichtung aus beispielsweise Polyamid (PA) mit den Flock-Dimensionen 1.00 mm / 3.3 dtex versehen, wobei die erste Zahl auf die Länge der einzelnen Fasern und die zweite Zähl auf die Dichte des Flocks verweist.

Unter einer Flockbeschichtung bzw. Beflockung versteht man den Auftrag von Flockfasem auf eine Oberfläche. Hierfür werden die zu beflockenden Oberflächenbereiche nach einer Vorbehandlung mit einem Klebstoff belegt. Die zunächst regellos angeordneten Flockfasern werden in einem elektrostatischen Feld ausgerichtet und durch dieses auf die Oberfläche gelenkt. Anschliessend lässt man den Klebstoff aushärten und erhält einen gleichmässigen Flor mit im Wesentlichen senkrecht von der Oberfläche abragenden Fasern.

Die Querstreifen 14, 15 aus Flockbeschichtung weisen beispielsweise eine Breite d von 9 mm und einen Abstand zwischen benachbarten Querstreifen von 15 mm auf. Im gezeigten Beispiel sind je fünf Querstreifen 14 auf der Vorderseite und je fünf Querstreifen 15 auf der Rückseite des Streifens 12 angeordnet, wobei die Querstreifen 14 auf der Vorderseite gegenüber den Querstreifen 15 auf der Rückseite in Längsrichtung des Streifens 12 so gegeneinander versetzt angeordnet sind, dass die Querstreifen 14 auf der Vorderseite jeweils zwischen den Querstreifen 15 auf der Rückseite und umgekehrt liegen. Die Höhe h der Querstreifen 14, 15 aus der Flockbeschichtung entspricht etwa der Länge der einzelnen, von der Oberfläche des Streifen 12 aus Trägermaterial abragenden Flockfasern, im vorliegenden Beispiel also etwa 1 mm.

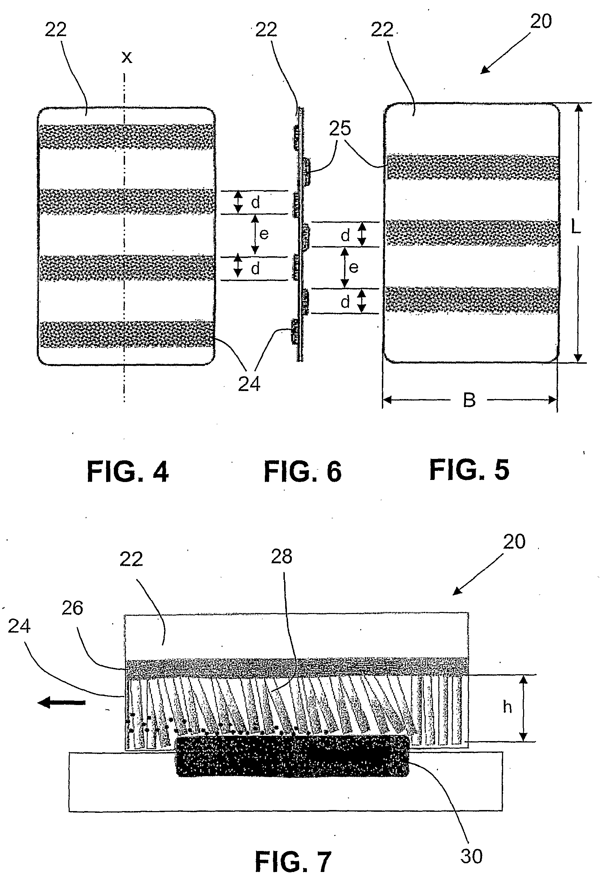

Eine in den Figuren 4 bis 6 dargestellte Reinigungskarte 20 für Kreditkartenautomaten entspricht in ihrem Aufbau im Wesentlichen dem vorgängig beschriebenen Reinigungsstreifen 10 für Geldautomaten und weist eine den Abmessungen einer Kreditkarte entsprechende Länge L von beispielsweise 85 mm und eine Breite B von beispielsweise 54 mm auf. Im gezeigten Beispiel entspricht die Längsrichtung der Reinigungskarte 20 der Einschubrichtung x des Stecklesers eines Kreditkartenautomaten. Die Reinigungskarte 20 umfasst eine Karte oder einen Streifen 22 aus einem Trägermaterial aus z.B. Polyvinylchlorid (PVC) einer Dicke von z.B. 0.3 mm. Der Streifen 22 ist beidseitig mit Querstreifen 24, 25 aus einer Flockbeschichtung aus beispielsweise Polyamid (PA) mit den Flock-Dimensionen 1.00 mm / 3.3 dtex versehen.

Die Querstreifen 24, 25 aus Flockbeschichtung weisen beispielsweise eine Breite d von 9 mm und einen Abstand zwischen benachbarten Querstreifen von 12 mm auf. Im gezeigten Beispiel sind je vier Querstreifen 24 auf der Vorderseite und je drei Querstreifen 25 auf der Rückseite der Karte oder des Streifens 22 angeordnet, wobei die Querstreifen 24 auf der Vorderseite gegenüber den Querstreifen 25 auf der Rückseite in Längsrichtung des Streifens 22 so gegeneinander versetzt angeordnet sind, dass die Querstreifen 24 auf der Vorderseite jeweils zwischen den Querstreifen 25 auf der Rückseite und umgekehrt liegen. Die Höhe h der Querstreifen 24, 25 aus der Flockbeschichtung entspricht etwa der Länge der einzelnen, von der Oberfläche des Streifen 22 aus Trägermaterial abragenden Flockfasern, im vorliegenden Beispiel also etwa 1 mm.

Fig. 7 zeigt die Anordnung der über eine Klebstoffschicht 26 auf dem Streifen 22 als Trägermaterial fixierten Flock-Fasern 28 in einem Querstreifen 24 beim Reinigen eines Magnetkopfes 30 des Kartenlesers eines Kreditkartenautomaten. Dank Bürstenwirkung der Flockbeschichtung ergibt sich eine effektive Reinigung. Die hervorragende Schmutzaufnahme des Flocks verhindert das blosse Verteilen des Schmutzes im Innern des Kartenlesers. Die Partikel werden durch die Fasern aufgenommen und mit dem Herausnehmen der Karte entfernt.

Zur Erhöhung der Reinigungswirkung kann die Flockbeschichtung der Querstreifen 14, 15 bzw. 24, 25 mit einem Reinigungsmittel getränkt sein. In diesem Fall werden die feuchten Reinigungsstreifen oder -karten 10, 20 bis zu ihrem Gebrauch in einem fluiddichten Beutel aufbewahrt.

Die von einem Reinigungsstreifen 10 für Geldautomaten zu reinigenden Teile betreffen vor allem Transportrollen und -bänder, Sensoren und Referenzflächen, die von einer Reinigungskarte 20 für Kreditkartenautomaten zu reinigenden Teile vor allem Transportrollen, Sensoren Magnetkköpfe und Chips.

In den dargestellten Beispielen entspricht die Längsrichtung des Reinigungsstreifens oder der Reinigungskarte immer der Automatenrichtung bzw. der Einschubrichtung, d.h. sie entspricht der Längsrichtung der üblicherweise ebenfalls in ihrer Längsrichtung in die entsprechenden Geld- oder Kreditkartenautomaten einzuschiebenden Banknoten oder Kreditkarten. Bei Automaten mit quer zu ihrer Längsrichtung einzuschiebenden Banknoten oder Kreditkarten werden die Reinigungsstreifen und -karten ebenfalls quer zu ihrer Längsrichtung eingeschoben, wobei in jedem Fall die Querstreifen auf den Reinigungsstreifen und -karten quer zur Automaten- bzw. Einschubrichtung angeordnet sind.

Die Anordnung der Querstreifen aus Flock auf den Reinigungsstreifen und -karten, die Breite der Querstreifen, der Abstand zwischen den Querstreifen, die Länge der Flockfasern und die Flockdichte, die chemische Zusammensetzung des Flocks, der Aufbau der Streifen und Karten und die Zusammensetzung der verwendeten Trägermaterialien ist nicht auf die vorstehend beschriebenen und in der Zeichnung beispielhaft dargestellten Ausführungsformen beschränkt.

### Bezugszeiehenliste

- 10: Reinigungsstreifen für Geldautomaten
- 12: Streifen aus Trägermaterial
- 14, 15: Querstreifen aus Flockbeschichtung
- 20: Reinigungskarte für Kreditkarten-Automaten
- 22: Streifen aus Trägermaterial
- 24, 25: Querstreifen aus Flockbeschichtung
- 26: Klebstoffschicht
- 28: Flockfaser
- 30: Magnetkopf
- L: Länge von 10 bzw. 20
- B: Breite von 10 bzw. 20
- d: Breite von 14, 15 bzw. 24, 25
- e: Abstand 14-14, 15-15 bzw. 24-24, 25-25
- x: Automatenrichtung
- h: Höhe der Querstreifen bzw. Flockfasern

## Patentansprüche

1. Reinigungsstreifen oder -karte für Geld- und Kreditkarten-Automaten, mit einem mit Flockfasern (28) beschichteten Streifen (12, 22) aus einem Trägermaterial, wobei zwei einander gegenüberliegende Streifenkanten eine Automatenrichtung (x) definieren und die quer zu einer Einschubrichtung in einen Geld- und Kreditkarten-Automaten gemessene Breite des Streifens (12, 22) im wesentlichen der Länge einer Seitenkante einer zur Verwendung in einem zu reinigenden Geld- und Kreditkarten-Automaten geeigneten Banknote oder Kreditkarte entspricht, wobei der Streifen (12, 22) auf wenigstens einer seiner Oberflächen wenigstens drei quer zur Automatenrichtung (x) in Abstand zueinander angeordnete, mit einer Beschichtung aus Flockfasern (28) versehene Querstreifen (14, 15; 24, 25) aufweist, wobei die Querstreifen (14, 15; 24, 25) auf beiden Oberflächen des Streifens (12, 22) angeordnet sind, **dadurch gekennzeichnet, dass**
die auf der einen Oberfläche des Streifens (12, 22) angeordneten Querstreifen (14, 24) zwischen den auf der anderen Oberfläche des Streifens (12, 22) angeordneten Querstreifen (15, 25) liegen.

2. Reinigungsstreifen oder -karte nach Anspruch 1, **dadurch gekennzeichnet, dass** die Querstreifen (14, 15; 24, 25) eine Breite (d) von 5 bis 15 mm, vorzugsweise 8 bis 12 mm, aufweisen.

3. Reinigungsstreifen oder -karte nach Anspruch 1 oder 2, **dadurch gekennzeichnet, dass** die Querstreifen (14, 15; 24, 25) einen gegenseitigen Abstand (e) von 5 bis 20 mm, vorzugsweise 8 bis 18 mm, aufweisen.

4. Beutel, **dadurch gekennzeichnet, dass** der Beutel fluiddicht ist und dass Reinigungsstreifen oder -karten nach einem der Ansprüche 1 bis 3 darin aufbewahrt sind, wobei die Reinigungsstreifen oder -karten (10, 20) mit einem Reinigungsmittel getränkt sind.

## Claims

1. Cleaning strip or card for cash and credit card machines, with a strip (12, 22) coated with flock fibers (28) and made from a carrier material, wherein two opposing strip edges define a machine direction (x) and the width of the strip (12, 22) measured transverse to a direction of insertion into a cash and credit card machine corresponds substantially to the length of a side edge of a bill suitable for use in a cash and credit card machine to be cleaned, wherein
the strip (12, 22) has on at least one of its surfaces at least three transverse strips (14, 15; 24, 25) that are arranged transversely to the machine direction (x) in a manner spaced from one another and that are coated with flock fibers (28), wherein the transverse strips (14, 15; 24, 25) are arranged on both surfaces of the strip (12, 22), **characterized in that**
the transverse strips (14,24) arranged on the one surface of the strip (12, 22) are arranged between the transverse strips (15,25) arranged on the other surface of the strip (12,22).

2. Cleaning strip or card according to claim 1, **characterized in that** the transverse strips (14, 15; 24, 25) have a width (d) of 5 to 15 mm, preferably 8 to 12 mm.

3. Cleaning strip or card according to claim 1 or 2, **characterized in that** transverse strips (14, 15; 24, 25) have a mutual spacing (e) of 5 to 20 mm, preferably 8 to 18 mm.

4. Bag, **characterized in that** the bag is fluid-tight and that cleaning strips or cards according to any one of the claims 1 to 3 are stored therein, wherein the cleaning strips or cards (10, 20) are soaked with a cleaning agent.

## Revendications

1. Une bande ou carte nettoyante (10) destinée à des distributeurs de billets et à des distributeurs à cartes de crédit, ayant une bande (12, 22) en matière de support revêtue de fibres floquées (28), où deux arêtes de bandes opposées définissent une direction de distributeur (x) et la largeur de la bande (12, 22), mesurée transversalement à la direction d'insertion dans le distributeur de billets ou distributeur à cartes de crédit, correspond essentiellement à la longueur d'une arête latérale d'un billet de banque ou d'une carte de crédit adapté(e) à l'utilisation dans un distributeur de billets ou distributeur à cartes de crédit à nettoyer, où la bande (12, 22) présente sur au moins l'une de ses surfaces trois bandes transversales (14, 15; 24, 25) dotées d'un revêtement en fibres floquées (28), où les bandes transversales (14, 15; 24, 25) sont disposées sur les deux surfaces de la bande (12, 22), **caractérisée en ce que** les bandes transversales (14, 24) disposées sur l'une surface de la bande (12, 22) sont situées entre les bandes transversales (15; 25) disposées sur l'autre surface de la bande (12, 22).

2. Une bande ou carte nettoyante (10) selon la revendication 1, **caractérisée en ce que** les bandes transversales (14, 15, 24, 25) présentent une largeur (d) de 5 à 15 mm, préférablement de 8 à 12 mm.

3. Une bande ou carte nettoyante (10) selon la revendication 1 ou 2, **caractérisée en ce que** les bandes transversales (14, 15, 24, 25) présentent un espace mutuel (e) de 5 à 20 mm, préférablement de 8 à 18 mm.

4. Sac, **caractérisé en ce que** le sac est étanche aux fluides et que des bandes ou cartes nettoyantes selon une des revendications 1 à 3 sont conservées dedans, où les bandes ou cartes nettoyantes (10, 20) sont imbibées d'un produit nettoyant.
